Europäisches Patentamt

European Patent Office

Office européen des brevets

(19)

(11) Numéro de publication : **0 457 677 A1**

# (12) DEMANDE DE BREVET EUROPEEN

(21) Numéro de dépôt : **91401253.9**

(22) Date de dépôt : **15.05.91**

(51) Int. Cl.⁵ : **G06F 1/00**

(30) Priorité : **16.05.90 FR 9006113**

(43) Date de publication de la demande :
**21.11.91 Bulletin 91/47**

(84) Etats contractants désignés :
**BE DE ES GB IT NL SE**

(71) Demandeur : **TELEMECANIQUE**
**43-45, Boulevard Franklin Roosevelt**
**F-92504 Rueil-Malmaison Cedex (FR)**

(72) Inventeur : **Barillier, Gilbert**
**Les Sausses**
**F-06510 Gattiers (FR)**
Inventeur : **Gardaire, Gilles**
**29 avenue Paul Aren, Résidence l'Impériale,**
**Bât C.**
**F-06000 Nice (FR)**
Inventeur : **Jaraudias, Patrice**
**Mas des Romarins, Villa 3, Chemin de la**
**Campanette**
**F-06800 Cagnes-sur-Mer (FR)**
Inventeur : **Tournier, Yves**
**Chemin des Quatre Vets Prolongé**
**F-06140 Vence (FR)**

(74) Mandataire : **Bouju, André**
**Cabinet André Bouju, B.P. 6250**
**F-75818 Paris Cédex 17 (FR)**

(54) **Procédé de gestion des droits d'utilisation de plusieurs logiciels sur un poste de travail informatique et système pour sa mise en oeuvre.**

(57)    Procédé de gestion des droits d'utilisation d'un ou plusieurs logiciels sur un poste de travail informatique (1,10), ces droits étant contenus dans un module clé original (CO) destiné à coopérer avec le poste de travail (1,10) pour autoriser une continuité d'exploitation desdits logiciels.
   Le procédé comprend une étape préalable de création (I) d'un module clé de travail (CT) et d'un module clé de sauvegarde (CB) associé de façon exclusive au module clé de travail (CT), à partir du module clé original (CO) et d'un premier module clé vierge (CVa), suivie d'une étape d'exploitation normale (II) des logiciels sur le poste de travail (1,10).
   Utilisation dans le domaine de l'informatique industrielle et notamment pour la protection contre l'utilisation illicite de logiciels.

EP 0 457 677 A1

FIG_1

La présente invention concerne un procédé de gestion des droits d'utilisation de plusieurs logiciels sur un poste de travail informatique ou d'automatisme industriel.

Elle vise également un système pour sa mise en oeuvre.

Le développement important de la duplication et de l'utilisation illicites de logiciels informatiques a conduit les concepteurs et distributeurs de logiciels à mettre en oeuvre de nombreux procédés de contrôle de l'utilisation de ces logiciels sur un poste de travail informatique, parmi lesquels les procédés de contrôle mettant en oeuvre une clé électronique associée à un logiciel et qui en échangeant de façon appropriée des informations avec le poste de travail permette une utilisation du logiciel associé.

De nombreuses formes de mise en oeuvre de ces procédés sont actuellement utilisées, parmi lesquelles celles divulguées dans les brevets français 2 579 790 et 2 600 184. Par ailleurs, une demande de brevet français déposée en même temps que la présente demande au nom de la demanderesse, concerne un procédé de configuration d'un poste de travail informatique sur lequel sont implantés plusieurs logiciels, qui permet la réunion de l'ensemble des droits d'utilisation de ces logiciels sur un unique module clé original, facilitant ainsi l'exploitation de ces logiciels sur le poste de travail.

Or, si la mise en oeuvre d'un module clé contenant les droits d'utilisation d'un ou plusieurs logiciels constitue indéniablement un atout considérable pour le fournisseur de logiciels dans son effort pour faire obstacle à des tentatives d'utilisation frauduleuse des logiciels fournis à ses clients, l'utilisation de clés peut cependant créer des difficultés d'exploitation considérables pour l'utilisateur en cas de panne d'un module clé. La survenue d'une panne d'un module clé contenant des droits d'utilisation d'un ou plusieurs logiciels a actuellement pour effet de pénaliser l'utilisateur du poste de travail en bloquant toute utilisation de logiciel protégé pendant le temps d'intervention et de dépannage du module clé.

Par ailleurs, la fourniture systématique de deux modules clés originaux, l'un faisant fonction de module clé de travail et l'autre de copie de sauvegarde, n'est pas satisfaisante car elle pourrait permettre à des clients utilisateurs indélicats d'exploiter des droits d'utilisation supplémentaires indus notamment en plaçant simultanément les deux modules clés originaux sur deux postes de travail.

De plus, se pose pour le fournisseur le problème important de l'identification des droits d'utilisation licites au sein d'un module clé en panne et déclaré par un utilisateur comme contenant plusieurs droits résultant d'opérations antérieures d'union de droits. Les procédés actuels de gestion de droits ne permettent pas d'avoir la garantie que les droits revendiqués par l'utilisateur d'un module clé en panne étaient effectivement contenus dans ce module clé. De même, il est actuellement impossible pour le fournisseur des logiciels d'avoir la garantie que le module clé en panne ou détruit qui lui est retourné par l'utilisateur et déclaré par celui-ci comme contenant des droits d'utilisation, n'a pas été en fait vidé auparavant des droits qu'il contenait initialement à l'issue d'une opération antérieure d'union au profit d'un autre module clé.

Le but de la présente invention est de remédier à ces inconvénients en proposant un procédé de gestion des droits d'utilisation d'un ou plusieurs logiciels sur un poste de travail informatique ou d'automatisme industriel, ces droits étant contenus dans un module clé original.

Suivant l'invention, le procédé comprend une étape préalable de création d'un module clé de travail et d'un module clé de sauvegarde associés de façon exclusive, à partir du module clé original et d'un premier module clé vierge, suivie d'une étape d'exploitation normale des logiciels sur le poste de travail. Ainsi, avec le procédé selon l'invention, l'utilisateur dispose d'un module clé de sauvegarde qui doit être placé en lieu sûr et qui sera mis en oeuvre en cas de panne du modèle clé de travail. Ce module clé de sauvegarde étant associé de façon exclusive au module clé de travail, le fournisseur des logiciels aura la garantie qu'un module clé de sauvegarde contenant des droits d'utilisation différents, ne pourra être substitué au module clé de sauvegarde créé préalablement. Les deux modules clés de travail et de sauvegarde forment ainsi une paire indissociable qui constitue d'une part, pour l'utilisateur, la possibilité d'une continuité d'exploitation en cas de panne de la clé de travail, et d'autre part, pour le fournisseur, une garantie contre des revendications abusives de droit d'utilisation en cas de panne du module clé de travail.

Selon une caractéristique avantageuse de l'invention, le procédé comprend, en cas de panne du module clé de travail, une étape de récupération non réversible au cours de laquelle un module clé de secours limité à une exploitation temporaire est créé à partir d'un second module clé vierge et des informations contenues dans le module clé de sauvegarde qui est ensuite inhibé.

Ainsi, avec le procédé selon l'invention, l'utilisateur du poste de travail peut continuer à exploiter les logiciels installés sur son poste de travail en cas de panne du module clé de travail, grâce au module de secours créé au cours de l'étape de récupération. De cette façon, la continuité d'exploitation peut être assurée pendant le temps nécessaire au dépannage du module clé en panne qui est retourné par l'utilisateur au fournisseur, accompagné du module clé de sauvegarde inhibé. En outre, la non réversibilité de l'étape de récupération garantit l'intégrité et la protection des droits d'utilisation contenus dans le module clé de secours en interdisant tout transfert de tout ou partie de ces droits sur un autre module, le module clé de sauvegarde étant par ailleurs inhibé.

Selon une autre caractéristique de l'invention, appliquée à un module clé original contenant plusieurs droits d'utilisation issus d'une opération préalable d'union, à l'issue de l'étape de création, une opération de partition desdits droits d'utilisation au sein du module clé de travail n'est possible qu'en combinaison avec le module clé de sauvegarde associée dont le contenu est alors actualisé en fonction de l'opération de partition effectuée.

Ainsi, le module clé de sauvegarde reste l'image effective et la preuve des droits d'utilisation réellement contenus au moment de la panne dans le module clé de travail ayant été soumis à une ou plusieurs partitions de droits. L'utilisateur d'un module clé de travail ne peut donc revendiquer la restitution de droits qui auraient été préalablement transférés hors du module clé de travail dans un autre module clé au cours d'une opération de partition.

Selon encore une autre caractéristique avantageuse de l'invention, après l'étape de récupération, une étape de génération d'un nouveau couple constitué d'un nouveau module clé fonctionnel et d'un module clé de sauvegarde est exécutée par le service fournisseur des logiciels, à partir des modules clés de travail en panne et de sauvegarde inhibé.

De cette façon, le fournisseur et plus généralement le service responsable de la protection des logiciels, conserve la maîtrise totale de la génération d'un nouveau couple de modules clés en réponse au retour d'un module clé de travail défectueux nécessairement retourné accompagné du module clé de sauvegarde inhibé correspondant qui lui est associé.

Selon une autre caractéristique de l'invention, l'étape de génération comprend une étape de vérification de l'association du module clé de travail en panne et du module clé de sauvegarde inhibé conduisant dans le cas où cette vérification n'est pas satisfaite, à un rejet desdits modules et de la demande de dépannage injustifiée, et dans le cas contraire, à une étape de récupération des informations stockées dans le module clé de sauvegarde inhibé et qui sont ensuite inscrites au cours d'une étape d'inscription, dans un premier module clé vierge qui constitue alors le nouveau module clé de travail. Une étape de sauvegarde est ensuite exécutée au cours de laquelle les informations contenues dans le nouveau module clé de travail sont dupliquées dans un second module clé vierge qui constitue alors le nouveau module clé de sauvegarde.

Ainsi, la vérification de l'association des deux modules clés retournés par l'utilisateur constitue une contribution efficace à la volonté de mettre en échec toute tentative de détournement frauduleux des droits d'utilisation de logiciels protégés, qui est effectuée préalablement à la récupération des information, notamment des droits d'utilisation, contenus dans le module clé de sauvegarde inhibé.

Suivant un autre aspect de l'invention, le système de gestion des droits d'utilisation de plusieurs logiciels sur un poste de travail informatique, ces droits étant contenus dans un module clé original, et ce système comprenant des moyens de support pour recevoir au moins deux modules clés et reliés au poste de travail informatique, mettant le procédé selon les revendications précédentes, est caractérisé en ce que les moyens de support coopèrent avec le poste de travail informatique pour générer à partir du module clé original et d'un premier module clé vierge connectés auxdits moyens de support, un module clé de travail et un module clé de sauvegarde.

D'autres particularités et avantages de l'invention apparaîtront encore dans la description ci-après. Aux dessins annexés donnés à titre d'exemples non limitatifs:

- la figure 1 est une vue schématique illustrant les différentes étapes du procédé selon l'invention;
- la figure 2 est un organigramme simplifié d'un programme utilitaire mis en oeuvre dans le cas d'une panne d'un module clé fonctionnel, dans le cadre d'une forme préférée de mise en oeuvre du procédé selon l'invention;
- la figure 3 est un organigramme simplifié d'un autre programme utilitaire mis en oeuvre dans le cas d'une panne d'un module clé de sauvegarde;

On va maintenant décrire une forme préférée de mise en oeuvre du procédé selon l'invention en même temps que le système pour sa mise en oeuvre.

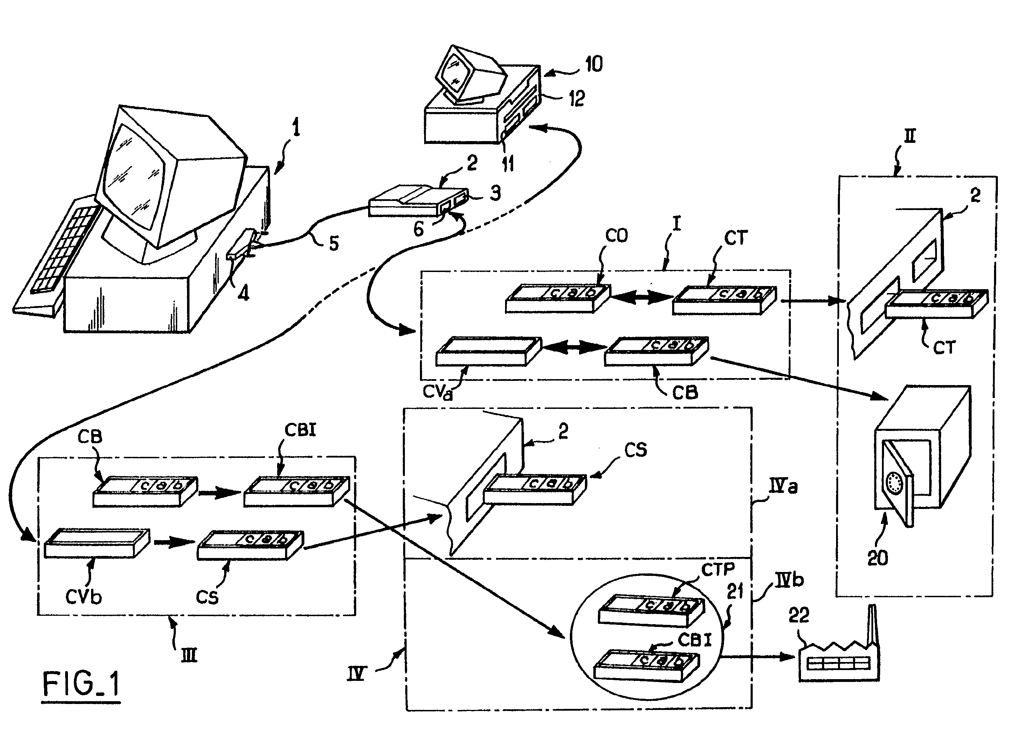

Un utilisateur ou opérateur souhaite installer sur un poste de travail informatique, par exemple un microordinateur 1 de type compatible PC ou un poste de travail spécialisé 10 en référence à la figure 1, un ensemble de plusieurs logiciels à chacun desquels sont associés des droits d'utilisation respectifs. La mise en oeuvre du procédé de configuration qui fait l'objet d'une demande de brevet déposée simultanément par le présent déposant, a permis d'obtenir un module clé original CO contenant l'union des droits d'utilisation des logiciels concernés représentés symboliquement par les lettres a, b et c. Le poste de travail de l'utilisateur est doté d'un support de clé qui est soit externe 2 dans le cas du microordinateur 1, soit interne 11,12 dans le cas d'un poste de travail spécialisé 10. Le support de clé externe 2 comprend classiquement deux fentes ou logements 6,3 destinés à accueillir des modules clés et est relié au microordinateur 1 via un connecteur de type parallèle Centronics et un câble de connexion 5.

On emploiera dans la suite de la description indifféremment les termes de module clé, de module ou de clé pour désigner un même objet contenant des droits d'utilisation d'un logiciel. En outre, on considèrera le cas de l'utilisation d'un microordinateur comme support de description, sachant que celle-ci peut tout autant s'appliquer au cas d'un poste de travail spécialisé.

Dans une étape initiale I du procédé selon l'invention, l'utilisateur insère dans le support de clé 2, le module original CO contenant les droits d'utilisation et un module vierge CVa. Un logiciel de gestion pour la mise en oeuvre du procédé selon l'invention, implanté préalablement sur le poste de travail de l'utilisateur, exécute alors à partir du module d'origine CO et du module vierge CVa, une opération de création d'un module de travail CT et d'un module de sauvegarde CB mutuellement associés par des identificateurs appropriés. Il est à noter que cette opération est réversible.

A l'issue de cette étape de création I, l'utilisateur du poste de travail dispose du module de travail CT qui est alors un module fonctionnel, et qu'il doit insérer dans le support de travail 2 pour entreprendre une étape II d'exploitation normale du poste de travail 1. Le module de sauvegarde CB doit alors être stocké en lieu sûr, par exemple un coffre de sécurité 20, et est considéré comme le garant d'une utilisation licite de l'ensemble de logiciels auxquels sont associés les droits d'utilisation.

En cas de panne du module clé de travail CT interdisant alors tout accès à l'un des logiciels protégés par ce module, une étape III de récupération est entreprise au cours de laquelle un module de secours CS est créé. Au début de cette étape de récupération, l'utilisateur insère dans le support de clé 2 le module de sauvegarde CB extrait de son lieu normal de stockage et un module vierge CVb. A l'issue de l'étape de récupération III, on dispose d'une part, d'un module de sauvegarde inhibé CBI et d'autre part, d'un module de secours CS auquel est associée une durée d'utilisation limitée.

Il est à noter que cette étape de récupération est non réversible et n'est possible qu'une seule fois.

Il s'en suit une étape d'exploitation temporaire des logiciels IV pendant laquelle, d'une part (étape IVa), l'utilisateur dispose du module de secours CS qu'il insère alors dans le support de clé 2 afin de pouvoir utiliser les logiciels durant une durée prédéterminée, par exemple 200 heures, et d'autre part (étape IVb), le module de travail en panne CTP et le module de sauvegarde inhibé CBI sont retournés à l'entreprise 22 ayant fourni les logiciels pour la mise en oeuvre du procédé selon l'invention.

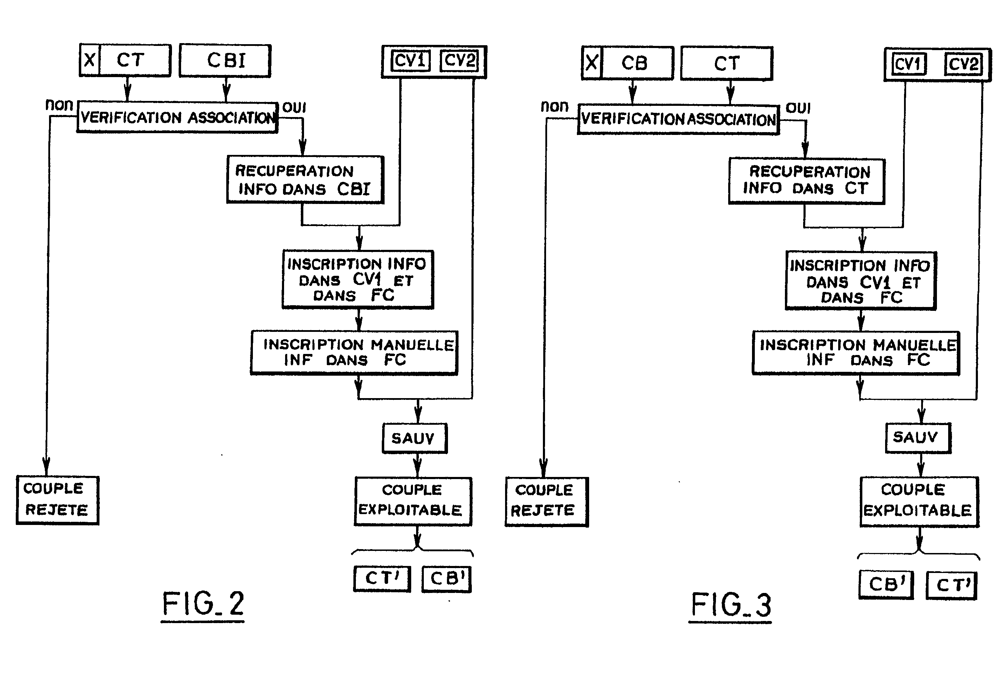

On va maintenant décrire les différentes opérations effectuées lors de l'exécution d'un programme utilitaire permettant de générer un nouveau module clé fonctionnel lorsque le module clé de travail normal est en panne, en référence à l'organigramme représenté en figure 2.

On suppose pour cela que l'utilisateur ou le client a retourné au fournisseur un module clé de travail CF en panne et un module clé de sauvegarde CBI inhibé. Une première étape de vérification d'association des deux modules est effectuée et conduit soit au rejet de ce couple de modules, soit à leur validation. Dans ce dernier cas, une récupération des informations et notamment des droits d'utilisation, référencées sur la figure 2 par INFO, dans le module de sauvegarde CBI, est réalisée. Deux modules clés vierges CV1, CV2 vont alors être utilisés, l'un pour contenir les droits qui viennent d'être récupérés, et l'autre pour devenir le nouveau module de sauvegarde. Ainsi, une étape d'inscription dans le module vierge CV1 et dans un fichier client FC, des informations récupérées INFO est exécutée et suivie éventuellement d'une inscription manuelle d'informations INF relatives à la situation du client concernant les pannes de module. A l'issue de cette inscription, une opération de sauvegarde SAUV est réalisée dans le module vierge CV2. On obtient alors un couple de modules clés exploitables CT', CB'.

Dans le cas d'une panne d'un module clé de sauvegarde CB alors que le module clé de travail CT est toujours fonctionnel, une alternative de la présente invention consiste à créer une clé de secours temporaire à partir de la clé de travail CT qui est alors inhibée (CTI) et à retourner pour remplacement cette clé CTI avec la clé de sauvegarde en panne CBP. Un processus analogue est alors utilisé et comporte une étape de vérification de l'association des deux modules retournés, de manière similaire à l'organigramme de la figure 3. Si l'association est effectivement vérifiée, La récupération des informations et en particulier des droits d'utilisation est effectuée dans le module de travail CTI. Ces informations sont ensuite inscrites dans un premier module vierge CV1 qui devient alors un nouveau module de travail CT' et dans un fichier client FC. D'autres informations concernant la situation du client sont inscrites dans ce fichier. Un second module vierge CV2 est utilisé pour effectuer une sauvegarde et obtenir ainsi un nouveau module de sauvegarde CB'. La non vérification de l'association des deux modules retournés conduit à un rejet du couple de modules.

Dans chacun des cas de panne qui viennent d'être traités, l'utilisateur reçoit un nouveau couple de modules clés comprenant un nouveau module clé de travail contenant les droits d'utilisation initiaux et permettant une exploitation normale, et un nouveau module de sauvegarde qui doit être stocké en lieu sûr. Une autre solution pratique consiste à remettre à l'utilisateur un nouveau module clé original contenant les droits d'utilisation initiaux et au moins un modules clés vierge, à charge pour l'utilisateur d'effectuer lui-même l'opération de création d'un nouveau module clé de sauvegarde. Le fichier client détenu par l'entreprise ou le fournisseur des logiciels, permet d'identifier d'éventuels clients indélicats qui provoqueraient sciemment des situations de panne en vue d'obtenir de façon illicite des droits d'utilisation supplémentaires.

L'utilisateur n'est pas obligé de créer une clé de secours CS, il peut aussi restituer pour remplacement, selon le module en panne, le couple CTP + CB ou le couple CT + CBP.

Bien sûr, la présente invention n'est pas limitée aux exemples qui viennent d'être décrits et de nombreux aménagements peuvent être apportés à ces exemples sans sortir du cadre de l'invention.

Ainsi, le procédé selon l'invention peut être appliqué à de nombreux types de postes de travail pourvu qu'ils soient dotés d'un support ou d'un connecteur de clés.

Ce même procédé peut aussi s'appliquer à la protection de logiciels exploités sur des automates programmables.

En outre, la phase d'exploitation temporaire peut inclure des contraintes d'utilisation spécifiques, telles que la restriction à un nombre limité de logiciels.

On peut aussi envisager l'utilisation d'autres ports d'entrée/sortie que le port parallèle considéré dans l'exemple de mise en oeuvre qui vient d'être décrit, en fonction des caractéristiques spécifiques du poste de travail utilisé.

## Revendications

1. Procédé de gestion des droits d'utilisation d'un ou plusieurs logiciels sur un poste de travail informatique (1,10) ou d'automatisme industriel, ces droits étant contenus dans un module clé original (CO) destiné à coopérer avec le poste de travail (1,10) pour autoriser une continuité d'exploitation desdits logiciels, caractérisé en ce qu'il comprend une étape préalable de création (I) d'un module clé de travail (CT) et d'un module clé de sauvegarde (CB) associé de façon exclusive au module clé de travail (CT), à partir du module clé original (CO) et d'un premier module clé vierge (CVa), suivie d'une étape d'exploitation normale (II) des logiciels sur le poste de travail (1,10).

2. Procédé selon la revendication 1, caractérisé en ce qu'il comprend, en cas de panne du module clé de travail (CT), une étape de récupération (III) non réversible au cours de laquelle un module clé de secours (CS) pour une exploitation temporaire (IV) est créé à partir d'un second module clé vierge (CVb) et des informations contenues dans le module clé de sauvegarde (CB) qui est ensuite inhibé (CBI).

3. Procédé selon les revendications 1 ou 2, appliqué à un module clé original contenant plusieurs droits d'utilisation issus d'une opération préalable d'union, caractérisé en ce qu'à l'issue de l'étape de création (I), une opération de partition desdits droits d'utilisation au sein du module clé de travail (CT) n'est possible qu'en combinaison avec le module clé de sauvegarde associé (CB) dont le contenu est alors actualisé en fonction de l'opération de partition effectuée.

4. Procédé selon les revendications 1 ou 3, et la revendication 2, caractérisé en ce qu'après l'étape de récupération (III), une étape de génération d'un nouveau couple (CT',CB') constitué d'un nouveau module clé de travail (CT') et d'un module clé de sauvegarde (CB') est exécutée par le service fournisseur des logiciels, à partir des modules clés de travail en panne (CTP) et de sauvegarde inhibé (CBI).

5. Procédé selon la revendication 4, caractérisé en ce que l'étape de génération comprend une étape de vérification de l'association du module clé de travail en panne (CTP) et du module clé de sauvegarde inhibé (CBI) conduisant dans le cas où cette vérification n'est pas satisfaite, à un rejet desdits modules et de la dépannage injustifiée, et dans le cas contraire, à une étape de récupération des informations (INFO) stockées dans le module clé de sauvegarde inhibé (CBI) et qui sont ensuite inscrites au cours d'une étape d'inscription, dans un premier module clé vierge (CV1) qui constitue alors le nouveau module clé de travail (CT').

6. Procédé selon la revendication 5, caractérisé en ce que l'étape de génération comprend en outre une étape de sauvegarde (SAUV) exécutée à la suite de l'étape d'inscription et au cours de laquelle les informations (INFO) contenues dans le nouveau module clé de travail sont dupliquées dans un second module clé vierge (CV2) qui constitue alors le nouveau module clé de sauvegarde (CB').

7. Procédé selon la revendication 6, caractérisé en ce qu'au cours de l'étape d'inscription, les informations récupérées (INFO) dans le module clé de sauvegarde inhibé (CBI), notamment les droits d'utilisation des logiciels, sont en outre inscrites dans un fichier client (FC) correspondant à l'utilisateur des logiciels.

8. Procédé selon la revendication 7, caractérisé en ce que l'étape d'inscription comprend en outre une étape d'inscription manuelle d'informations spécifiques liées aux opérations de dépannage dans le fichier client (FC).

9. Procédé selon l'une des revendications 4 à 8, caractérisé en qu'il comprend en outre une séquence de génération exécutable par le service responsable et correspondant au cas d'une panne du module clé de sauvegarde CDP alors qu'une clé de secours a été générée à partir du module clé de travail fonctionne (CT), ladite séquence de génération comportant des étapes de vérification, d'inscription et de sauvegarde de structure équivalente à celles de la première étape de génération et conduisant à la génération d'un nouveau couple constitué par un nouveau module clé de travail (CT') et un nouveau module clé de sauvegarde (CB'), à partir du module clé de travail inhibé CTI et du module de sauvegarde en panne CBP.

10. Procédé selon la revendication 9, caractérisé en ce que les séquences de génération comprennent en outre des étapes d'inscription des informations récupérées dans un fichier client (FC) et d'inscription manuelle d'informations spécifiques des opérations de dépannage dans ledit fichier client (FC).

11. Procédé selon l'une des revendications 4 à 10, caractérisé en que l'exploitation temporaire est limitée à une durée d'exploitation prédéterminée.

12. Système de gestion des droits d'utilisation de plusieurs logiciels sur un poste de travail informatique (1,10), ces droits étant contenus dans un module clé original (CO), et ce système comprenant des moyens de support (2;11,12) pour recevoir au moins deux modules clés et reliés au poste de travail informatique (1,10), mettant le procédé selon les revendications précédentes, caractérisé en ce que les moyens de support (2;11,12) coopèrent avec le poste de travail informatique (1,10) pour générer à partir du module clé original (CO) et d'un premier module clé vierge (CVa) connectés auxdits moyens de support (2;11,12), un module clé de travail (CT) et un module clé de sauvegarde (CB).

13. Système selon la revendication 12, caractérisé en ce que les moyens de support (2;11,12) sont agencés pour générer en combinaison avec le poste de travail informatique (1,10), en cas de panne du module clé de travail (CT), un module clé de secours (CS) et un module clé de sauvegarde inhibé (CBI) à partir du module clé de sauvegarde (CB) et d'un module clé vierge (CVb).

FIG_1

EP 0 457 677 A1

EP 0 457 677 A1

## FIG. 2

```
┌───┬──────┐   ┌──────────┐              ┌─────┬─────┐
│ X │  CT  │   │   CBI    │              │ CV1 │ CV2 │
└───┴──────┘   └──────────┘              └─────┴─────┘
      │              │                      │
non   ▼              ▼                    oui
   ┌──────────────────────────┐
   │  VERIFICATION ASSOCIATION │
   └──────────────────────────┘
                    │
                    ▼
              ┌─────────────────┐
              │  RECUPERATION   │
              │  INFO DANS CBI  │
              └─────────────────┘
                    │
                    ▼
              ┌─────────────────┐
              │ INSCRIPTION INFO│
              │  DANS CV1 ET    │
              │   DANS FC       │
              └─────────────────┘
                    │
                    ▼
              ┌────────────────────┐
              │ INSCRIPTION MANUELLE│
              │   INF DANS FC       │
              └────────────────────┘
                    │
                    ▼
                 ┌──────┐
                 │ SAUV │
                 └──────┘
                    │
 ┌────────┐         ▼
 │ COUPLE │      ┌────────────┐
 │ REJETE │      │   COUPLE   │
 └────────┘      │ EXPLOITABLE│
                 └────────────┘
                    │
              ┌──────┬──────┐
              │ CT'  │ CB'  │
              └──────┴──────┘
```

FIG. 2

## FIG. 3

```
┌───┬──────┐   ┌──────────┐              ┌─────┬─────┐
│ X │  CB  │   │   CT     │              │ CV1 │ CV2 │
└───┴──────┘   └──────────┘              └─────┴─────┘
      │              │                      │
non   ▼              ▼                    oui
   ┌──────────────────────────┐
   │  VERIFICATION ASSOCIATION │
   └──────────────────────────┘
                    │
                    ▼
              ┌─────────────────┐
              │  RECUPERATION   │
              │  INFO DANS CT   │
              └─────────────────┘
                    │
                    ▼
              ┌─────────────────┐
              │ INSCRIPTION INFO│
              │  DANS CV1 ET    │
              │   DANS FC       │
              └─────────────────┘
                    │
                    ▼
              ┌────────────────────┐
              │ INSCRIPTION MANUELLE│
              │   INF DANS FC       │
              └────────────────────┘
                    │
                    ▼
                 ┌──────┐
                 │ SAUV │
                 └──────┘
                    │
 ┌────────┐         ▼
 │ COUPLE │      ┌────────────┐
 │ REJETE │      │   COUPLE   │
 └────────┘      │ EXPLOITABLE│
                 └────────────┘
                    │
              ┌──────┬──────┐
              │ CB'  │ CT'  │
              └──────┴──────┘
```

FIG. 3

Office européen
des brevets

# RAPPORT DE RECHERCHE EUROPEENNE

Numero de la demande

EP 91 40 1253

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. CL5) |
|---|---|---|---|
| A | EP-A-0 268 139 (IBM)<br><br>* abrégé *<br>* colonne 2, ligne 8 - ligne 38 *<br>* colonne 3, ligne 2 - ligne 21 *<br>* colonne 7, ligne 26 - colonne 10, ligne 27 *<br>* colonne 15, ligne 36 - colonne 17, ligne 14 *<br>--- | 1-5,11, 13 | G06F1/00 |
| A | IBM TECHNICAL DISCLOSURE BULLETIN.<br>vol. 27, no. 5, Octobre 1984, NEW YORK US<br>page 3013;<br>COMERFORD ET AL.: 'Method for transferring copyprotected software without destroying copy-protection '<br>* le document en entier *<br>--- | 1 | |
| A | EP-A-0 201 628 (CADAM)<br>* abrégé *<br>----- | 1,12 | |
| | | | DOMAINES TECHNIQUES RECHERCHES (Int. CL5) |
| | | | G06F |

Le présent rapport a été établi pour toutes les revendications

| Lieu de la recherche | Date d'achèvement de la recherche | Examinateur |
|---|---|---|
| LA HAYE | 31 JUILLET 1991 | MOENS R.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)